# EUROPEAN PATENT SPECIFICATION

(11) **EP 3 860 366 B1**
(45) Date of publication and mention of the grant of the patent: **13.04.2022**
(21) Application number: 20824632.2
(22) Date of filing: 13.11.2020
(51) Int. Cl.: A23L 7/109

(54) **A METHOD OF MAKING FRESH FILLED PASTA AND FILLED PASTA OBTAINED THEREBY**
VERFAHREN ZUR HERSTELLUNG VON FRISCHEN GEFÜLLTEN TEIGWAREN UND SO HERGESTELLTE GEFÜLLTE TEIGWAREN
PROCÉDÉ DE FABRICATION DE PÂTES FRAÎCHES FARCIES ET PÂTES FARCIES AINSI OBTENUES

(30) Priority: 14.11.2019 IT 201900021141
(43) Date of publication of application: 11.08.2021
(73) Proprietor: BERTAGNI 1882 S.p.A., 38063 Avio (TN) (IT)
(72) Inventor: BOLLA, Enrico, 37218 Verona (VR) (IT)
(74) Representative: Maroscia, Antonio
(86) International application number: PCT/IB2020/060694
(87) International publication number: WO 2021/094995

(56) References cited:
- CN-A- 105 432 708
- GB-A- 2 414 158
- US-A1- 2015 313 264
- US-A1- 2018 064 118
- Anonymous: "Exploding Lobster Ravioli - A Blithe PALATE", , 3 July 2005 (2005-07-03), XP055708957, Retrieved from the Internet: URL:https://www.ablithepalate.com/2005/07/ bursting_with_f.html [retrieved on 2020-06-25]

## Description

### Technical field

The present invention generally finds application in the field of food and particularly relates to a method of making fresh filled pasta, such as ravioli, cappelletti, tortelli, panzerotti and the like.

The invention also relates to a fresh filled pasta that can be obtained by such method.

### Definitions

The term "filling" or "filler" as used hereinbelow shall refer to a food product obtained from the combination of raw or cooked ingredients to obtain a more or less uniform mixture.

The term "coextrusion" and derivatives thereof as used hereinbelow shall refer to a process of dispensing multiple products in the pasty state through a substantially tubular nozzle or a substantially circular orifice.

### Background art

The use of pasta with a dose of filling enclosed therein has been long known in food industry. Such products are typical products of Italian gastronomy and the filling may be made of several types of ingredients such as, for instance, meat, fish, cereals, vegetables, cheese, milk derivatives, fruit and fruit derivatives, protein- or fat-based substances, sauces, creams or the like.

According to their shapes, these filled food products are known as ravioli, tortellini, cappelletti, panzerotti, although many other shapes exist for filled food products from regional Italian and foreign gastronomic traditions.

Food products with multiple-filler are also known, which have a filler formed of a first dose of a first filling and a second dose of a second filling, i.e. first and second pasty food ingredients respectively.

One example of these food products is disclosed in EP 475 911, which comprises an envelope made of two distinct pockets or shells enclosing differentiated components or ingredients, and thus designed to remain separate and not contact each other.

A feature of these prior art products is that they are actually formed of two ravioli of different tastes and attached to each other, whereby they cannot be tasted at the same time, unless they are joined and ingested together.

A further feature of these prior art products is that a large amount of pasta is required to form such food product, which will dilute the taste of the individual ingredients.

A further example of food products having multiple fillings is disclosed in WO2011/117641, which describes a food product composed of an envelope or outer tubular body made of pasta dough with one or more channels in which different pasty food substances are held.

The method of making the product, e.g. in the form of a roll comprises coextruding the body made of pasta with a sauce and minced meat disposed in respective concentric or radially staggered channels.

In this product fresh pasta cannot be used in practice for the body. Also, the components of the fillings must undergo a thermal cooking treatment before being extruded into their respective channels.

Furthermore, the method only provides cylindrical envelopes and fillings, in which the first and second components are disposed in respective coaxial or parallel channels. In practice, the product is tasted in sliced form, and resembles more a sausage than a pasta product.

US2006/121169 discloses a pasta in the form of ravioli comprising an outer layer made of multi-colored and multi-layered paste and an inner layer joined to the outer layer along a peripheral edge to form a closed container enclosing a filling composed of single or combined ingredients.

One drawback of this product is that its filling is one unit and cannot have multiple doses, thereby lacking any variety of tastes and flavors.

In an attempt to obviate the aforementioned drawbacks, methods of making filled food products have been developed in which first and second fillings are laid on a sheet of pasta, which is later closed upon itself or by another sheet, to cover and envelope the two fillings.

One example of such food products and the method of making them is disclosed in EP2900083, by the Applicant hereof, in which the first and second fillings are coextruded in substantially overlapped or coplanar relationships at successive times, to form a filled food product in which the two food components of the filling do not mix together but are separate.

This will provide filled food products prepared in strict compliance with the original recipes, and will allow the consumer to appreciate the taste obtained by the combination of the individual tastes of each food component in the filling.

Nevertheless, a common limitation of these prior art methods is that they can make a filled food product with multiple fillers with the food components of the filling in the pasty state.

Furthermore, these known methods can provide conventional food products and do not allow use and/or leverage of valuable high-quality raw materials.

CN105432708 discloses a method of making a soup dumpling which comprises a wrapper of fresh pasta filled with multiple solid and liquid fillings, mixed together.

GB 2 414 158 discloses a method to obtain a filled pasta product that can be easily microwaved and comprises a filling comprising a sauce in which pieces of meat are dispersed.

US 2018/064118 discloses a method of obtaining a filled fresh pasta product comprising a fresh pasta envelope which encloses two or three doses of different types of fillings in overlapped or juxtaposed relationship. None of the aforementioned methods provides special treatment of one or more doses of fillings having a particular consistency.

### Technical Problem

In the light of the known prior art, the technical problem addressed by the present invention is to provide a method of making fresh filled pasta that is relatively inexpensive and can use fillings of different consistencies and with valuable food ingredients.

### Disclosure of the invention

The object of the present invention is to obviate the above drawback, by providing a method of making fresh filled pasta that is highly efficient and relatively cost-effective.

A particular object of the present invention is to provide a method of making fresh filled pasta that can use food products having high organoleptic properties.

A further object of the present invention is to provide a method of making fresh filled pasta that can afford the use of complex ingredients, problematic in terms of quality, cost and usable amount.

Yet another object of the present invention is to provide a method of making fresh filled pasta that allows the filling components to be distributed in different positions, according to a wide variety of shapes and types of products.

A further object of the present invention is to provide a method of making fresh filled pasta that can provide filled products having multiple fillers.

Another object of the present invention is to provide a method of making fresh filled pasta that allows a plurality of filling doses to be deposited without allowing them to overflow from or leak from the other filling doses.

These and other objects, as more clearly explained hereinafter, are fulfilled by a method of making fresh filled pasta as defined in claim 1, such as ravioli, cappelletti, tortelli, panzerotti and the like, said method comprising the steps of a) preparing a first sheet of fresh pasta and laying it on a flat support, b) depositing a first dose of a first food filling on the first sheet, c) depositing a second dose of a second food filling, other than the first, on the first dose of the first filling and d) preparing a second sheet of fresh pasta and laying the second sheet over the first sheet and the first and second filling doses.

Preferably, steps are provided of e) joining the first and second sheets along a substantially continuous edge of predetermined shape corresponding to that of the finished product and f) cutting the sheets joined along the peripheral edge to obtain the desired type of fresh filled pasta.

Advantageously, according to the invention, the first filling is in a shape-memory pasty state, the second filling is in a liquid or gel state, and a step is provided between the step of b) depositing the first dose and the step of c) depositing the second dose, i.e. g) plastically deforming the first dose to form a permanent upwardly open cavity thereon for receiving and holding the second dose in the liquid or gel state without allowing it to overflow from or leak out of the first dose.

Thanks to these features, the inventive method of making fresh filled pasta will afford the provision of filled products with fresh pasta envelopes, whose filling is composed of multiple food ingredients inside the same envelope, at least one of which is in liquid or gel form.

Thus, the method of the invention affords valuable ingredient additions to the filling in the liquid or gel form, for characterizing the taste of the filling, such as fresh valuable mushrooms, truffles, caviar, botargo, exotic spices, fine meat and fish, fine wines or spirits, distillates, high-quality fruits, high-quality fruit preparations.

Preferably, the step of g) plastically deforming the first dose to form a cavity is carried out by a punch tool arranged above the first dose.

This characteristic can increase the manufacturing speed to the finished product, while maintaining the physical and organoleptic properties of the raw materials that are used to make the fresh filled pasta unchanged.

A further aspect of the invention, as defined in claim 14, provides a fresh filled pasta that can be obtained by the method as described above.

Advantageous embodiments of the invention are defined in accordance with the dependent claims.

### Brief description of the drawings

Further characteristics and advantages of the invention will be more apparent from the detailed description of a preferred, non-exclusive embodiment of a method of making fresh filled pasta having at least two fillings, which is described as a non-limiting example with the help of the annexed drawings, in which:
FIG. 1 is a block diagram of the method of making fresh filled pasta according to the invention;
FIGS. 2A-2D are side sectional views of certain steps of the method of the invention;
FIG. 3 is a schematic perspective view of a first embodiment of the method of the invention;
FIG. 4 is a schematic perspective view of a second embodiment of the method of the invention;
FIG. 5 is a perspective schematic view of a detail of the method of the invention.

### Detailed description of a preferred exemplary embodiment

The accompanying figures show a method of making fresh filled pasta, generally designated by numeral 1, that is mainly intended for preparation of dishes of high gastronomic quality.

In particular, the fresh filled pasta 1 made with the method of the invention may be ravioli, cappelletti, tortelli, panzerotti, or the like and configured to be eaten cooked.

If the fresh filled pasta 1 is intended for cooking, it may be namely designed to be either boiled, e.g. in water or broth, or baked, microwaved or fried in oil.

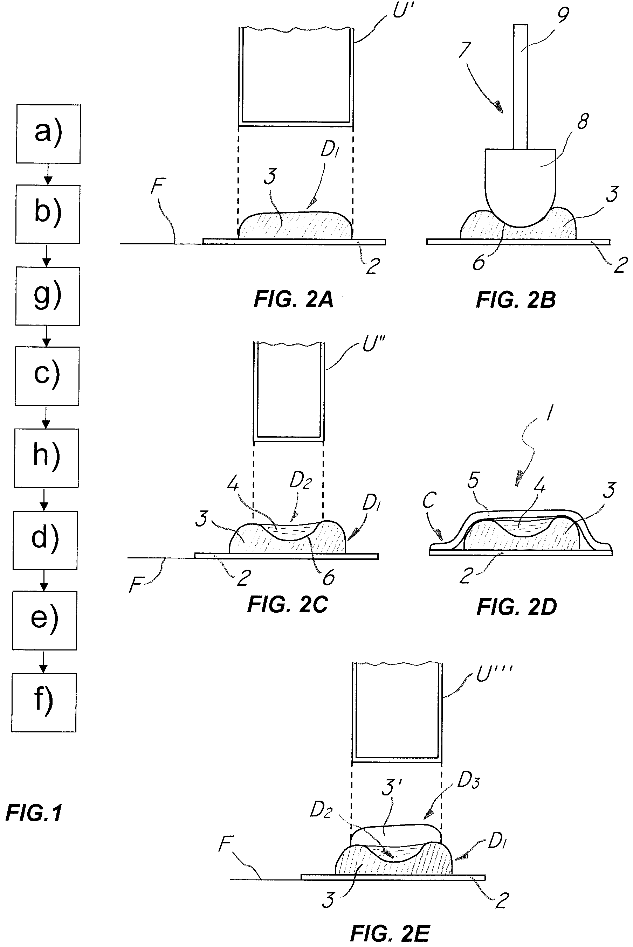

As better shown in FIG. 1, the method comprises a step of a) preparing a first sheet 2 of fresh pasta and laying it on a flat support F.

As a non-limiting example, the first sheet 2 may be made from a mixture based on common wheat flour, hard wheat, a small amount of water and optionally eggs.

Also, the dough may undergo one or more steps of unidirectional and/or multidirectional lamination to obtain a continuous strip of fresh pasta of predetermined thickness, preferably ranging from 0.3 mm to 2.5 mm, with known techniques as typically used for bakery products such as bread, croissants and the like.

Then, steps are provided of b) depositing a first dose D₁ of a first food filling 3 on the first sheet 2 and c) depositing a second dose D₂ of a second food filling 4 other than the first 3 on the first dose D₁ of the first filling 3.

The first food filling 3 may be obtained by mixing together a number of edible raw materials selected from the group comprising meat, fish, eggs, cheese, milk derivatives, fruit, fruit derivatives, sausages, vegetables, cereals, protein- and fat-based substances, or a combination thereof, optionally with the addition of seasonings, flavors and sauces, even when these cannot be easily combined according to traditional recipes.

It should be noted that the doses D₁, D₂ are deposited on the first sheet 2 by means of individual single-tube nozzles U', U" and at successive times, as shown in FIGS. 2A, 2C, 3 and 4.

The step of c) depositing the second dose D₂ is followed by a step of d) preparing a second sheet 5 of fresh pasta and laying it over the first sheet 2, the dose D₁ and the second dose D₂ of the fillings 3, 4, as best shown in FIG. 2D.

The second sheet 5 may be formed from the same dough as the first sheet 2 or, alternatively, it can be formed from a dough of a different type, possibly comprising organoleptic properties other than those of the first dough.

Downstream of the preparation step d), steps are provided of e) joining the first sheet 2 and the second sheet 5 along a substantially continuous edge C of predetermined shape corresponding to that of the finished product and a step of f) cutting the sheets 2, 5 joined along the peripheral edge to obtain the desired type of fresh filled pasta 1.

Thus, the first sheet 2 and the second sheet 5 can have predetermined sizes and shapes for containing the first 3 and second 4 food fillings according to the particular type of finished product to be produced.

Advantageously, the choice of fresh pasta and its base components shall allow the sheets 2, 5 to optimally wrap the outer surface of the fillings 3, 4 with high surface adhesion, for almost perfect liquid tightness, even in liquids or under boiling conditions, as required for cooking with no loss of the fillings 3, 4.

Furthermore, this will provide food products 1 with double filling having a characteristic taste, and faithfully reproducing the traditional regional gastronomy tastes.

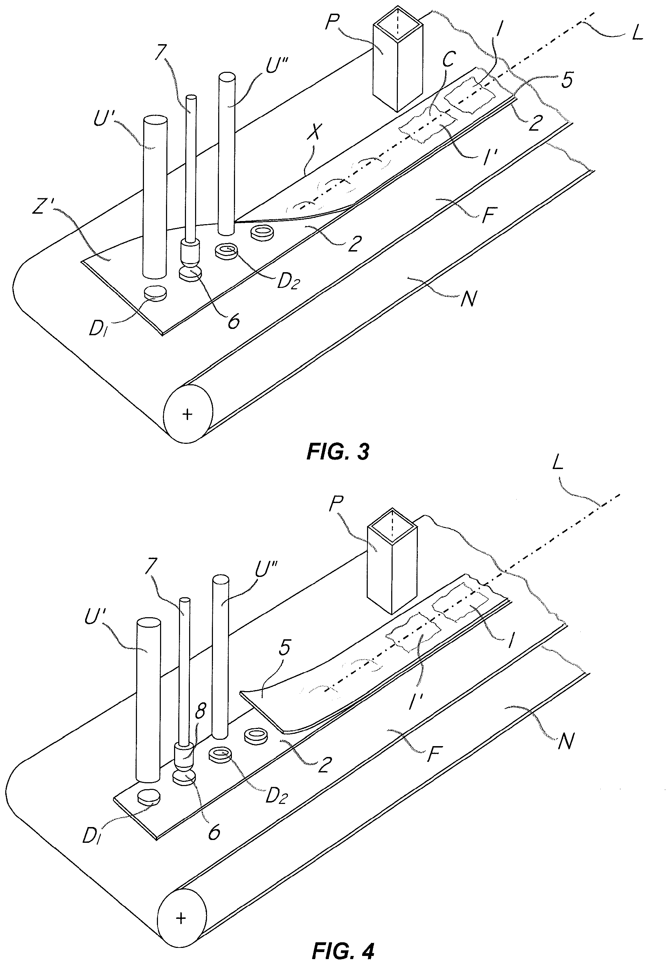

In a first embodiment, as shown in FIG. 3, the sheets 2, 5 may be formed from the same continuous strip of fresh pasta 2', which is folded on itself along a longitudinal line X using a special ploughshare-shaped blade, not shown and known to the skilled person.

This embodiment is particularly suitable to make fresh filled pasta 1 such as tortelli, cappelletti, panzerotti and the like.

Alternatively, in a second embodiment as shown in FIG. 4, the sheets 2, 5 may be separated and distinguished and laid one on top of the other. This embodiment is particularly suitable to make fresh filled pasta 1 such as ravioli and panzerotti.

Conveniently, the cutting step f) may be carried out by means of a forming and cutting tool P adapted to join the sheets 2, 5 together along the peripheral edge C and cut them proximate the latter to form the fresh filled pasta 1.

In a particular aspect of the invention, the first filling 3 is in a shape-memory pasty state and the second filling 4 is in a liquid or gel state.

Advantageously, between the step of b) depositing the first dose D₁ and the step of c) depositing the second dose D₂, a step g) of plastically deforming the first dose D₁ to form a permanent upwardly open cavity 6 for receiving and holding the second dose D₂ without allowing it to overflow or leak from the first dose D₁, as best shown in FIG. 2B.

Preferably, the first dose D₁ of the first filling 3 in the pasty state may be deposited on the first sheet 2 by extrusion, whereas the second dose D₂ of the second filling 4 in the liquid or gel state is deposited on the cavity 6 by injection.

Optionally, the second dose D₂ of the second filling 4 in the liquid or gel state may be deposited on the cavity 6 by extrusion or gravity.

It will be appreciated that the use of a second filling 4 in the liquid state in the deposition step c) and the plastic deformation of the first dose D₁ in step g) of the method of the invention can provide a novel fresh filled pasta 1 having high organoleptic quality.

Furthermore, the method of the invention can use food products having high organoleptic characteristics and complex ingredients, problematic in terms of quality, cost and usable amount.

That is, the type of second filling 4 in the liquid state may comprise two different preparation forms according to the quality and the type of ingredients in use.

In a first preparation form, the second filling 4 in the liquid state will be able to maintain its fluid structure during tasting while maintaining its taste unchanged even after cooking the fresh filled pasta 1.

In this first preparation form, the second filling 4 in the liquid state may comprise liquid or gel extracts or concentrates of food products selected from the group comprising valuable mushrooms, truffles, herbs or spices, meat, fish, fine cheese, fine wine, spirits, distillates, high-quality fruit or high-quality fruit-based preparations.

In a second preparation form, the second filling 4 may act as a liquid carrier or inert matrix for one or more valuable ingredients having particular properties in terms of texture, cost, quality and amount of use.

In this second preparation form, the second filling 4 in the liquid state may comprise a liquid carrier in which valuable ingredients selected from the group comprising truffle, saffron threads, caviar (roe from sturgeon, lumpfish, salmon, trout), botargo, or the like are dispersed.

Optionally, downstream from the step of c) depositing the second dose D₂, there will be a step of h) depositing a third dose D₃ of a filling 3', other than the second filling 4 and other than or the same as the first filling 3, on the second dose D₂ so as to entirely cover it, as shown in FIG. 2E.

As shown in the figures, the step of g) plastically deforming the first dose D₁ may be carried out by interaction of the latter with a punch 7 whose bottom end 8 has a shape that mates that of the cavity 6 and a size smaller than the plan shape size of the first dose D₁.

In order to reduce the tendency of the punch 7 to adhere to the first dose D₁ of the first filling 3 and to prevent the latter from being removed from the first sheet 2, the punch 7 may be conveniently lubricated or sprayed with non-stick liquids.

Also, the bottom end 8 of the punch 7 may be connected to a rod 9 having a vertical axis Z and made of metal, plastic or other food-grade materials.

The length of the rod 9 may be predetermined or adjustable as needed to interact with the first dose D₁ and the punch 7 may be heated or rotated R about its vertical axis Z to further reduce the tendency of the punch 7 to adhere to the first dose D₁.

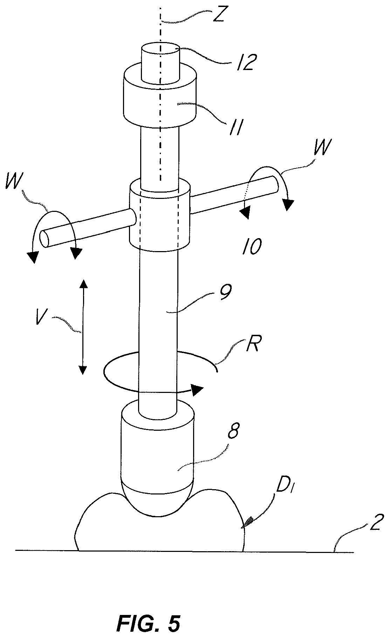

In an alternative embodiment of the invention, the punch 7 may comprise a device 10 adapted to impart a one- or multiple-axis oscillation W to the rod, as best shown in FIG. 5.

Nevertheless, it cannot be excluded that the punch 7 may be also simultaneously equipped with a rotating device, an oscillating device 10, a heating element and a lubricating device.

In a continuous processing plant, the first sheet 2 and the second sheet 5 are fed along a substantially longitudinal direction L by means of a movable flat support F comprising, for example, a closed-loop conveyor belt N, as shown in FIGS. 3 and 4.

Preferably, the first dose D₁ is deposited on the first sheet 2 in a predetermined position and the interaction of the first dose D₁ with the punch 7 occurs while keeping the flat support F substantially horizontal at a fixed height and imparting a vertical downward movement V to the punch 7, by means of a suitable drive device, not shown.

In an alternative embodiment, the interaction of the punch 7 with the first dose D₁ may occur while keeping the punch 7 at a fixed height and imparting an upward vertical movement to the flat support F.

Here, the punch 7 may comprise a plurality of weights 11 connected to the top end 12 of the rod 9, whose amount may be suitably adjusted according to the interaction required with the first dose D₁ of the first filling 3.

Nevertheless, it cannot be excluded that the punch 7 and the flat support F can simultaneously move in a vertical direction.

In the continuous processing plant, the second dose D₂ of the second filling 4 in the liquid state will be deposited atop the first dose D₁ at a time following the deposition of the dose D₁ and the formation of the cavity 6 by the punch 7.

Furthermore, a third individual single-tube nozzle U'" may be provided, aligned with the first nozzle U' and the second nozzle U", for depositing the third dose D₃ of filling 3' on the second dose D₂ so as to entirely cover the latter.

Once the doses D₁, D₂, and possibly the third dose D₃ have been deposited on the first sheet 2, the continuous processing plant folds the first sheet 2 along the longitudinal line X, or stretches the second sheet 5, on the doses D₁, D₂, D₃ to thereby form a semi-finished product 1'.

Finally, the semi-finished product 1' may be cut to size using a forming and cutting tool P, such that the sheets 2, 5 will be joined along a peripheral edge C and cut thereat to form fresh filled pasta 1, which will be closed in a perfectly liquid-tight manner at its peripheral edge C.

It will be apparent from the foregoing that the method of making fresh filled pasta according to the invention achieves the intended objects and is specifically highly efficient and relatively cost-effective.

Also, the method of making fresh filled pasta and the fresh filled pasta according to the invention can use pasty, liquid or gel fillings to make filled food products using valuable raw materials.

The method and the fresh filled pasta are susceptible to a number of changes or variants, within the inventive concept disclosed in the appended claims.

While the method and fresh filled pasta have been described with particular reference to the accompanying figures, the numerals referred to in the disclosure and claims are only used for the sake of a better intelligibility of the invention and shall not be intended to limit the claimed scope in any manner.

Reference herein to "one embodiment" or "the embodiment" or "some embodiments" indicates that a particular characteristic, structure or element that is being described is included in at least one embodiment of the inventive subject matter.

Furthermore, the particular characteristics, structures or elements may be combined together in any suitable manner to provide one or more embodiments.

### Industrial Applicability

The present invention may find application in industry, because it can be produced on an industrial scale in the field of food processing.

## Claims

1. A method of making fresh filled pasta (1), such as ravioli, cappelletti, tortelli, panzerotti, comprising the steps of:
a) preparing a first sheet (2) of fresh pasta and laying it on a flat support (F);
b) depositing a first dose (D₁) of a first food filling (3) on said first sheet (2);
c) depositing a second dose (D₂) of a second food filling (4) other than the first (3) on said first dose (D₁) of the first food filling (3);
d) preparing a second sheet (5) of fresh pasta and laying said second sheet (5) over said first sheet (2) said first dose (D₁) and said second dose (D₂) of filling (3, 4);
e) joining said first sheet (2) and said second sheet (5) along a substantially continuous edge (C) of a predetermined shape corresponding to the shape of the finished product;
f) cutting said sheets (2, 5) joined along said peripheral edge (C) to obtain the desired type of fresh filled pasta (1);
wherein said first filling (3) is in a shape-memory pasty state and wherein said second filling (4) is in a liquid or gel state, and a step is provided between said step of b) depositing said first dose (D₁) and said step of c) depositing said second dose (D₂), i.e. g) plastically deforming said first dose (D₁) to form a permanent upwardly open cavity (6) thereon for receiving and holding said second dose (D₂) in the liquid or gel state without allowing it to overflow from or leak out of said first dose (D₁).

2. Method as claimed in claim 1, **characterized in that** said step of g) plastically deforming said first dose (D₁) is carried out by interaction of said first dose (D₁) with a punch (7) having a bottom end (8) whose shape mates that of said permanent cavity (6) and whose size is smaller than that of the plan shape of said first dose (D₁).

3. Method as claimed in claim 2, **characterized in that** said interaction occurs while keeping said flat support (F) substantially horizontal at a fixed height and imparting a vertical downward movement (V) to said punch (7).

4. Method as claimed in claim 2, **characterized in that** said interaction occurs while keeping said punch (7) at a fixed height and imparting a vertical upward movement to said substantially horizontal flat support (F).

5. Method as claimed in claim 2, **characterized in that** said punch (7) is suitably lubricated or sprayed with non-stick liquids to be prevented from adhering to said first dose (D₁) of said first filling (3) and removing it from said first sheet (2).

6. Method as claimed in claim 2, **characterized in that** said punch (7) is heated to reduce its tendency to adhere to said first dose (D₁).

7. Method as claimed in claim 2, **characterized in that** said punch (7) is rotated (R) about its vertical axis (Z) to reduce its tendency to adhere to said first dose (D₁).

8. Method as claimed in claim 1, **characterized in that** it includes an optional step of h) depositing a third dose (D₃) of a filling (3') other than said second filling (4) and other than or the same as said first filling (3) on said second dose (D₂) so as to entirely cover it.

9. Method as claimed in claim 1, **characterized in that** said first dose (D₁) in the pasty state is deposited on said first sheet (2) by extrusion.

10. Method as claimed in claim 1, **characterized in that** said second dose (D₂) is deposited into said cavity (6) by injection, extrusion or gravity.

11. Method as claimed in claim 1, **characterized in that** said first filling (3) in the pasty state is obtained by mixing together a number of edible raw materials selected from the group comprising meat, fish, eggs, cheese, milk derivatives, sausages, vegetables, fruit and fruit derivatives, cereals, protein- and fat-based substances or a combination thereof, optionally with the addition of seasonings, flavors and sauces.

12. Method as claimed in claim 1, **characterized in that** said second filling (4) in the liquid state comprises liquid or gel extracts or concentrates of food products selected from the group comprising mushrooms, truffles, herbs or spices, meat, fish, cheese, wine, spirits, distillates, fruit or fruit-based preparations.

13. Method as claimed in claim 1, **characterized in that** said second filling (4) in the liquid state comprises a liquid carrier in which ingredients selected from the group comprising truffle, saffron threads, caviar, roe from sturgeon, lumpfish, salmon, trout, botargo
are dispersed.

14. A fresh filled pasta (1), such as ravioli, cappelletti, tortelli, panzerotti, that can be obtained by a method as claimed in one or more of the preceding claims, comprising:
- a first sheet (2) of fresh pasta;
- a first dose (D₁) of a first food filling (3) deposited on said first sheet (2);
- a second dose (D₂) of a second food filling (4) other than the first (3) deposited on said first dose (D₁) of the first food filling (3);
- a second sheet (5) of fresh pasta laid over said first sheet (2), said first dose (D₁) and said second dose (D₂) of filling (3, 4);
wherein said first sheet (2) and said second sheet (5) are joined along a substantially continuous edge (C) of predetermined shape and cut along said peripheral edge (C) to form the desired type of fresh filled pasta (1);
**characterized in that** said first filling (3) is in a shape-memory pasty state and said second filling (4) is in a liquid or gel state, said first dose (D₁) being deformed to form a permanent upwardly open cavity (6) thereon for receiving and holding said second dose (D₂) in the liquid or gel state without allowing it to overflow from or leak out of said first dose (D₁).

## Patentansprüche

1. Verfahren zur Herstellung frisch gefüllter Teigwaren (1), wie Ravioli, Cappelletti, Tortelli, Panzerotti, umfassend die Schritte:
a) Vorbereiten eines ersten Blattes (2) frischer Teigwaren und Auflegen auf eine flache Unterlage (F);
b) Aufbringen einer ersten Dosis (D₁) einer ersten Lebensmittelfüllung (3) auf das erste Blatt (2);
c) Aufbringen einer zweiten Dosis (D₂) einer zweiten Lebensmittelfüllung (4) anders als der ersten (3) auf die erste Dosis (D₁) der ersten Lebensmittelfüllung (3);
d) Herstellen eines zweiten Blattes (5) frischer Teigwaren und Auflegen des zweiten Blattes (5) über das erste Blatt (2), die erste Dosis (D₁) und die zweite Dosis (D₂) der Füllung (3, 4);
e) Verbinden des ersten Blatts (2) und des zweiten Blatts (5) entlang einer im Wesentlichen kontinuierlichen Kante (C) einer vorbestimmten Form, die der Form des Endprodukts entspricht;
f) Schneiden der entlang der Umfangskante (C) verbundenen Blätter (2, 5), um die gewünschte Art frisch gefüllter Teigwaren (1) zu erhalten;
wobei die erste Füllung (3) in einem pastösen Zustand mit Formgedächtnis ist und wobei die zweite Füllung (4) in einem flüssigen oder gelartigen Zustand ist, und ein Schritt zwischen dem Schritt b) des Abgebens der ersten Dosis (D₁) und dem Schritt c) des Abgebens der zweiten Dosis (D₂) vorgesehen ist, nämlich g) plastisches Verformen der ersten Dosis (D₁), um darauf einen permanenten, nach oben offenen Hohlraum (6) zum Aufnehmen und Halten der zweiten Dosis (D₂) im flüssigen oder gelförmigen Zustand zu bilden, ohne dass sie aus der ersten Dosis (D₁) überlaufen oder austreten kann.

2. Verfahren nach Anspruch 1, **dadurch gekennzeichnet, dass** der Schritt g) des plastischen Verformens der ersten Dosis (D₁) durch Wechselwirkung der ersten Dosis (D₁) mit einem Stempel (7) mit einem unteren Ende (8) ausgeführt wird, dessen Form zu der des permanenten Hohlraums (6) passt und dessen Größe kleiner als die der ebenen Form der ersten Dosis (D₁) ist.

3. Verfahren nach Anspruch 2, **dadurch gekennzeichnet, dass** die Wechselwirkung stattfindet, während der flache Träger (F) im Wesentlichen horizontal auf einer festen Höhe gehalten wird und dem Stempel (7) eine vertikale Abwärtsbewegung (V) verliehen wird.

4. Verfahren nach Anspruch 2, **dadurch gekennzeichnet, dass** die Wechselwirkung stattfindet, während der Stempel (7) auf einer festen Höhe gehalten wird und dem im Wesentlichen horizontalen flachen Träger (F) eine vertikale Aufwärtsbewegung verliehen wird.

5. Verfahren nach Anspruch 2, **dadurch gekennzeichnet, dass** der Stempel (7) geeignet geschmiert oder mit nichthaftenden Flüssigkeiten besprüht wird, um ihn zu verhindern, an der ersten Dosis (D₁) der ersten Füllung (3) zu haften und um ihn von dem ersten Blatt (2) zu entfernen.

6. Verfahren nach Anspruch 2, **dadurch gekennzeichnet, dass** der Stempel (7) erhitzt wird, um seine Tendenz zu verringern, an der ersten Dosis (D₁) zu haften.

7. Verfahren nach Anspruch 2, **dadurch gekennzeichnet, dass** der Stempel (7) um seine vertikale Achse (Z) gedreht (R) wird, um seine Tendenz zu verringern, an der ersten Dosis (D₁) zu haften.

8. Verfahren nach Anspruch 1, **dadurch gekennzeichnet, dass** es einen optionalen Schritt umfasst: h) Ablegen einer dritten Dosis (D₃) einer Füllung (3') anders als der zweiten Füllung (4) und anders als oder gleich als der ersten Füllung (3) auf der zweiten Dosis (D2), um sie vollständig abzudecken.

9. Verfahren nach Anspruch 1, **dadurch gekennzeichnet, dass** die erste Dosis (D₁) im pastösen Zustand durch Extrusion auf die erste Folie (2) aufgebracht wird.

10. Verfahren nach Anspruch 1, **dadurch gekennzeichnet, dass** die zweite Dosis (D₂) in den Hohlraum (6) durch Injektion, Extrusion oder Schwerkraft eingebracht wird.

11. Verfahren nach Anspruch 1, **dadurch gekennzeichnet, dass** die erste Füllung (3) im pastösen Zustand durch Zusammenmischen einer Anzahl essbarer Rohmaterialien erhalten wird, die aus der Gruppe ausgewählt sind, die Fleisch, Fisch, Eier, Käse, Milchderivate, Würste, Gemüse, Früchte und Fruchtderivate, Cerealien, protein- und fettbasierte Substanzen oder eine Kombination davon umfasst, gegebenenfalls unter Zusatz von Gewürzen, Aromen und Saucen.

12. Verfahren nach Anspruch 1, **dadurch gekennzeichnet, dass** die zweite Füllung (4) im flüssigen Zustand flüssige oder gelförmige Extrakte oder Konzentrate von Lebensmittelprodukten umfasst, die aus der Gruppe ausgewählt sind, die Pilze, Trüffel, Kräuter oder Gewürze, Fleisch, Fisch, Käse, Wein, Spirituosen, Destillate, Früchte oder Zubereitungen auf Fruchtbasis umfasst.

13. Verfahren nach Anspruch 1, **dadurch gekennzeichnet, dass** die zweite Füllung (4) im flüssigen Zustand einen flüssigen Träger umfasst, in dem Zutaten ausgewählt aus der Gruppe umfassend Trüffel, Safranfäden, Kaviar, Rogen vom Stör, Seehasen, Lachs, Forelle, Botargo dispergiert sind.

14. Frisch gefüllte Teigwaren (1), wie Ravioli, Cappelletti, Tortelli, Panzerotti, erhältlich durch ein Verfahren nach einem oder mehreren der vorhergehenden Ansprüche, umfassend:
- ein erstes Blatt (2) frische Teigwaren;
- eine erste Dosis (D₁) einer ersten Lebensmittelfüllung (3), die auf dem ersten Blatt (2) abgelegt ist;
- eine zweite Dosis (D₂) einer zweiten, anders als der ersten, Lebensmittelfüllung (4), die auf der ersten Dosis (D₁) der ersten Lebensmittelfüllung (3) abgelagert wird;
- ein zweites Blatt (5) aus frischen Teigwaren, das über das erste Blatt (2), die erste Dosis (D₁) und die zweite Dosis (D₂) der Füllung (3, 4) gelegt wird;
wobei das erste Blatt (2) und das zweite Blatt (5) entlang einer im wesentlichen durchgehenden Kante (C) mit vorbestimmter Form verbunden und entlang der Umfangskante (C) geschnitten werden, um die gewünschte Art frisch gefüllter Teigwaren (1) zu bilden;
**dadurch gekennzeichnet, dass** die erste Füllung (3) in einem pastösen Zustand mit Formgedächtnis ist und die zweite Füllung (4) in einem flüssigen oder gelartigen Zustand ist, wobei die erste Dosis (D₁) verformt wird, um darauf einen permanenten, nach oben offenen Hohlraum (6) zu bilden, zum Aufnehmen und Halten der zweiten Dosis (D₂) im flüssigen oder gelförmigen Zustand, ohne dass sie aus der ersten Dosis (D₁) überlaufen oder austreten kann.

## Revendications

1. Procédé de fabrication de pâtes fraîches fourrées (1), telles que raviolis, cappelletti, tortelli, panzerotti, comprenant les étapes consistant à :
a) préparer une première feuille (2) de pâtes fraîches et la déposer sur un support plat (F) ;
b) déposer une première dose (D₁) d'une première garniture alimentaire (3) sur ladite première feuille (2);
c) déposer une seconde dose (D₂) d'une seconde garniture alimentaire (4) autre que la première (3) sur ladite première dose (D₁) de la première garniture alimentaire (3);
d) préparer une seconde feuille (5) de pâtes fraîches et poser ladite seconde feuille (5) sur ladite première feuille (2) de ladite première dose (D₁) et de ladite seconde dose (D₂) de garniture (3, 4);
e) joindre ladite première feuille (2) et ladite seconde feuille (5) le long d'un bord sensiblement continu (C) d'une forme prédéterminée correspondant à la forme du produit fini;
f) couper lesdites feuilles (2, 5) jointes le long dudit bord périphérique (C) pour obtenir le type souhaité de pâtes fraîches fourrées (1);
dans lequel ladite première garniture (3) est dans un état pâteux à mémoire de forme et dans lequel ladite deuxième garniture (4) est dans un état liquide ou gel, et une étape est prévue entre ladite étape de b) dépôt de ladite première dose (D₁) et ladite étape consistant à c) déposer ladite deuxième dose (D₂), c'est-à-dire g) déformer plastiquement ladite première dose (D₁) pour y former une cavité permanente ouverte vers le haut (6) pour y recevoir et maintenir ladite deuxième dose (D₂) à l'état liquide ou de gel sans lui permettre de déborder ou de s'échapper de ladite première dose (D₁).

2. Procédé selon la revendication 1, **caractérisé en ce que** ladite étape de g) déformation plastique de ladite première dose (D₁) est réalisée par interaction de ladite première dose (D₁) avec un poinçon (7) ayant une extrémité inférieure (8) dont la forme épouse celle de ladite cavité permanente (6) et dont la taille est inférieure à celle de la forme en plan de ladite première dose (D₁).

3. Procédé selon la revendication 2, **caractérisé en ce que** ladite interaction se produit en maintenant ledit support plan (F) sensiblement horizontal à une hauteur fixe et en imprimant un mouvement vertical descendant (V) audit poinçon (7).

4. Procédé selon la revendication 2, **caractérisé en ce que** ladite interaction se produit tout en maintenant ledit poinçon (7) à une hauteur fixe et en imprimant un mouvement vertical vers le haut audit support plat sensiblement horizontal (F).

5. Procédé selon la revendication 2, **caractérisé en ce que** ledit poinçon (7) est convenablement lubrifié ou pulvérisé avec des liquides antiadhésifs pour empêcher qu'il adhère à ladite première dose (D₁) de ladite première garniture (3) et pour l'enlever de ladite première feuille (2).

6. Procédé selon la revendication 2, **caractérisé en ce que** ledit poinçon (7) est chauffé pour réduire sa tendance à adhérer à ladite première dose (D₁).

7. Procédé selon la revendication 2, **caractérisé en ce que** ledit poinçon (7) est tourné (R) autour de son axe vertical (Z) pour réduire sa tendance à adhérer à ladite première dose (D₁).

8. Procédé selon la revendication 1, **caractérisé en ce qu'**il comprend une étape facultative consistant à h) déposer une troisième dose (D₃) d'une garniture (3') autre que ladite deuxième garniture (4) et différente ou identique à ladite première garniture (3) sur ladite seconde dose (D₂) de manière à la recouvrir entièrement.

9. Procédé selon la revendication 1, **caractérisé en ce que** ladite première dose (D₁) à l'état pâteux est déposée sur ladite première feuille (2) par extrusion.

10. Procédé selon la revendication 1, **caractérisé en ce que** ladite deuxième dose (D₂) est déposée dans ladite cavité (6) par injection, extrusion ou gravité.

11. Procédé selon la revendication 1, **caractérisé en ce que** ladite première garniture (3) à l'état pâteux est obtenue en mélangeant ensemble un certain nombre de matières premières comestibles choisies dans le groupe comprenant la viande, le poisson, les oeufs, le fromage, les dérivés du lait, les saucisses, les légumes, fruits et dérivés de fruits, céréales, substances à base de protéines et de matières grasses ou une combinaison de ceux-ci, éventuellement avec l'ajout d'assaisonnements, d'arômes et de sauces.

12. Procédé selon la revendication 1, **caractérisé en ce que** ladite deuxième garniture (4) à l'état liquide comprend des extraits ou concentrés liquides ou gélifiés de produits alimentaires choisis dans le groupe comprenant les champignons, les truffes, les herbes ou épices, la viande, le poisson, le fromage, vins, spiritueux, distillats, fruits ou préparations à base de fruits.

13. Procédé selon la revendication 1, **caractérisé en ce que** ladite deuxième garniture (4) à l'état liquide comprend un support liquide dans lequel sont dispersés des ingrédients choisis dans le groupe comprenant la truffe, les filaments de safran, le caviar, les oeufs d'esturgeon, la lompe, le saumon, la truite, la poutargue.

14. Pâtes fraîches fourrées (1), telles que raviolis, cappelletti, tortelli, panzerotti, susceptibles d'être obtenues par un procédé selon l'une ou plusieurs des revendications précédentes, comprenant :
- une première feuille (2) de pâtes fraîches ;
- une première dose (D₁) d'une première garniture alimentaire (3) déposée sur ladite première feuille (2) ;
- une seconde dose (D₂) d'une seconde garniture alimentaire (4) autre que la première (3) déposée sur ladite première dose (D₁) de la première garniture alimentaire (3) ;
- une seconde feuille (5) de pâtes fraîches posée sur ladite première feuille (2), ladite première dose (D₁) et ladite seconde dose (D₂) de garniture (3, 4);
dans lequel ladite première feuille (2) et ladite deuxième feuille (5) sont jointes le long d'un bord sensiblement continu (C) de forme prédéterminée et coupées le long dudit bord périphérique (C) pour former le type souhaité de pâtes fraîches fourrées (1);
**caractérisé en ce que** ladite première garniture (3) est dans un état pâteux à mémoire de forme et ladite deuxième garniture (4) est dans un état liquide ou gel, ladite première dose (D₁) étant déformée pour former y dessus une cavité permanente ouverte vers le haut (6) pour recevoir et maintenir ladite deuxième dose (D₂) à l'état liquide ou de gel, sans lui permettre de déborder ou de s'échapper de ladite première dose (D₁).
